# EUROPEAN PATENT SPECIFICATION

(11) **EP 1 587 196 B1**
(45) Date of publication and mention of the grant of the patent: **08.10.2008**
(21) Application number: 05075807.7
(22) Date of filing: 07.04.2005
(51) Int. Cl.: H02G 3/08

(54) **Junction box**
Verbindungsdose
Boîte de jonction

(30) Priority: 15.04.2004 NL 1025955
(43) Date of publication of application: 19.10.2005
(73) Proprietor: B.V. Kunststoffenindustrie Attema, 4203 NJ Gorinchem (NL)
(72) Inventor: De Hoog, Antonie, 4213 DE Dalem (NL)
(74) Representative: Mertens, Hans Victor

(56) References cited:
- WO-A-03/012949
- DE-A- 2 410 963
- DE-B- 1 143 562
- FR-A- 1 098 984
- NL-A- 6 705 628

## Description

The invention relates to a box according to the preamble of claim 1.

A box of the abovementioned type is known from DE-A-2410963. The known box is provided with spouts which are formed integrally with the box and open into the box, and to which a conduit for wires of an electrical installation can be connected. Fixing material for fixing a part of the electrical installation to the ring consists of screws which can each be screwed through a respective aperture of the ring into an axially directed channel of the ring. The ring is rotatable in the box, so that during the placing of the material in the box a deviation from a desired orientation of the spouts relative to a wall in which the box is fitted can be compensated for by the rotation of the ring.

The applicant aims to improve the known box, so that it can be used on ports which are formed integrally in the wall of the box and are known per se, and in which a separate element, such as in particular a box connecting piece and a spout part, can be placed. Being able to fit a connecting piece is particularly desirable because an ideally suitable material, which is different from the material of the box, can be used then for this purpose, in particular a material which makes it possible to slide the connecting piece into or over edge parts of a port.

The use of such ports and of elements of the abovementioned type to be connected to them is known from NL-A-6705628. It is possible to slide in such an element on the outside of the box, in a direction from the open side to the bottom of the box. However, the junction box known from NL-A-6705628 does not have a ring of the abovementioned type.

Junction boxes are generally made of plastic and are manufactured by injection moulding.

After a box in accordance with DE-A-2410963 has been moulded in an injection moulding device, a core having on its circumference a rib fitting into the groove of the box will have to be removed. This requires the material to be sufficiently elastic to permit the top edge part of the box to return to the moulded shape. The average elongation occurring in the material here is determined by the difference in circumference of the core and of the rib. If the wall thickness is not constant, the elongation in the material, viewed over the circumference, will vary. The greatest - and consequently the critical - elongation will occur at the point where the wall thickness is the lowest. The lower the proportion of the circumference taken up by the thinnest parts of the circumference, the greater the elongation will be in those parts, and the critical limit at which the material ruptures will be reached earlier. For that reason it is important to make the wall thickness as uniform as possible at the level of the groove, viewed along the circumference. Since a certain space is desirable or necessary in the box for the accommodation of the installation material, and since a standardized pitch must be observed in order to permit the connection of two boxes, the part of the box wall with the circumferential groove cannot simply be increased in order to eliminate the abovementioned rupturing problem. Furthermore, the presence of desired holes in the wall in the region of the groove has an adverse effect on the distribution of the elongation. The closer such a hole lies to the open side of the box, the greater will be the elongation in the wall between a hole and the open side of the box. Until now that has prevented the fitting of, for example, a separate element, in particular of a box connecting piece, in a box with a ring.

The use of a more elastic material which is resistant to extreme elongation has the insuperable drawback that the resistance offered by the box to the elongation of the ring when a load is placed on the switching equipment is too low to keep the ring connected to the box.

The abovementioned drawbacks were considered insuperable until now for a box according to DE-A-2410963, which was also to be provided with ports with edge parts at ports of the outside wall of the box according to NL-A-6705628.

The applicant has now realized that the doctrine according to NL-A-6705628 followed until now for solving the abovementioned problems can be abandoned.

The aim of obtaining an improved box is therefore achieved according to the invention by means of a box according to claim 1.

Owing to the fact that, instead of being slid from the open side of the box, an element, in particular a box connecting piece, can now be slid towards the open side into the wall of the box and in that direction can be bounded by the part of the box wall with the internal circumferential groove for the ring, it is only necessary as regards the injection moulding process to take into account the forming of the groove at the open side. The cross section of the part of the box at its open side can remain uniform over the entire circumference, so that after the removal of the core with circumferential rib for the groove this shape will deform elastically in a substantially uniform manner and return to the desired form.

Other features and advantages of the invention will become clear from the explanation of the appended drawings.

In the drawings:
Fig. 1 shows a perspective view of a box according to the invention and, taken apart from it, a closing plate (or connecting piece) and a spout part; and
Fig. 2 shows a cross section of a corner part with the fixing ring of the box according to the invention shown in Fig. 1.

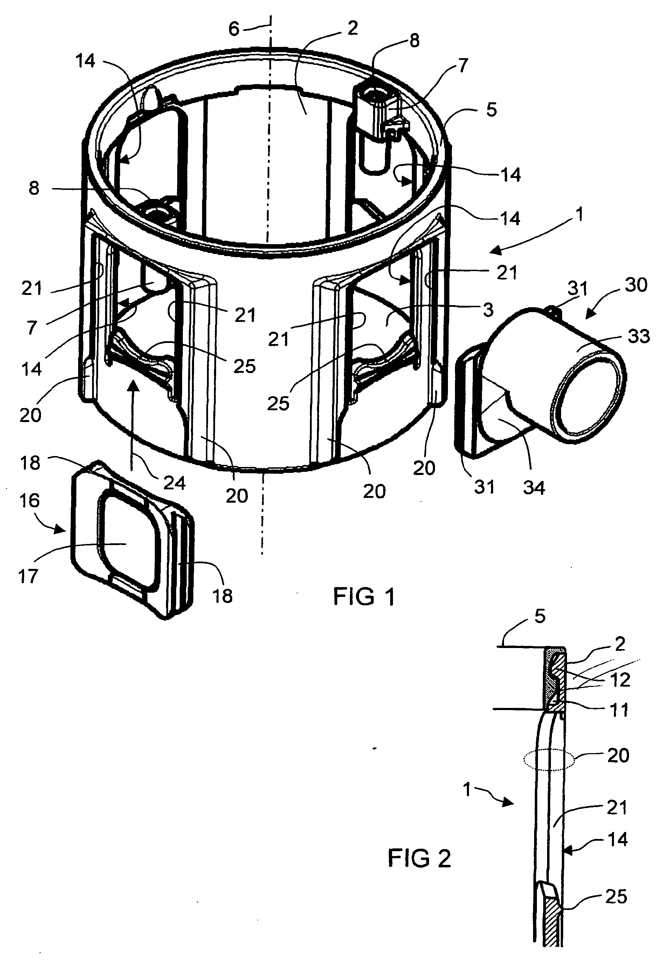

Fig. 1 shows a perspective view of a junction box 1 of an electrical installation according to the invention. The box 1 comprises a substantially cylindrical wall 2 and a bottom 3. In particular, the box 1 is made of plastic and is manufactured by injection moulding. At the open side, also called top side and front side, of the box 1 a ring 5 is fitted in the box 1. The wall 2 and the ring 5 are concentric and have a common center axis 6. The ring 5 has one or more columns 7 parallel to the axis 6 which have a screw channel with an opening 8 on the top side of the column 7. As a result of this, fixing screws (not shown) can be screwed into the columns 7 for the purpose of fixing a bottom part (not shown) of an electrical installation to the ring 5.

Fig. 2 shows a cross section of a corner part of the box 1 at the transition between the wall 2 and the ring 5. As can be seen in Fig. 2, at the open side of the box 1 a groove 11 is formed on the inside of the wall 2. The ring 5 has a circumferential rib 12 projecting into the groove 11. This means that the ring 5 can be fitted in the box in a captive manner and in such a way that it is rotatable about the axis 6. In order to facilitate the placing of the ring 5 in the box 1, the free end edge of the wall 2 is preferably bevelled on the inside, and the edge of the ring 5 to be positioned at the greatest depth in the box 1 is bevelled on the outside.

A box according to the invention can be provided with one or more fixed spouts formed integrally with the wall 2, for the connection of respective conduits of the electrical installation.

The box 1 according to the invention shown in Fig. 1 has no fixed spouts formed integrally with the wall 2, but the wall 2 is provided with a number of single ports 14. The ports 14 are open and can be closed by means of a closing plate 16. The closing plate 16 is substantially rectangular and has a central part 17 which can be pressed out by hand. Parallel grooves 18 are formed in opposite edges of the plate 16.

Each port 14 of the box 1 is bounded on the outside of the box 1 by two opposite edge parts 20, which are parallel to the axis 6. Opposite edges 21 of the edge parts 20 of a port 14 are situated at such a distance and have such a shape that the plate 16 can be slid in a direction indicated by the arrow 24 from the bottom side of the box 1 into the edge parts 20 of a port and to a point near the part of the wall 2 with the ring 5. The plate 16 has such dimensions that it can close the opening of the port 14. When the plate 16 has been slid in front of the opening of a port 14, it is prevented from sliding back in the direction opposite to that of the arrow 24 by the fact that it runs against a stop 25 of the port 14 which springs radially outwards. The stop 25 is bevelled in such a way that the plate 16 is slid in and encounters little hindrance from the stop 25.

The groove 18 of the plate 16 is preferably suitable for accommodating and guiding two edges 21 of opposite ports 14 of two adjacent boxes 1.

The material is preferably a material which permits easy sliding of the plate (or connecting piece) 16 into the wall 2 of the box, and which can be different from the material from which the box 1 is made. This means that with the use of the plate (connecting piece) 16 boxes 1 are easy to connect and to disconnect.

Instead of a closing plate (connecting piece) 16, a spout part 30 can be slid into the edge parts 20 of a port 14. The edges 21 of the edge parts 20 in that case grip over straight edges 31 of the spout part 30.

The spout part 30 shown has a substantially circular spout 33, of which an opening that can be slid opposite an opening of a port 14 is elongated in a direction parallel to the edges 31. This means that at the elongated opening a gradual transition or belly 34 is formed. Depending on the orientation of the spout part 30 while it is being slid into a port 14, the spout 33 will then be situated closer to or further away from the open side of the box 1 with the ring 5, while in both cases, despite the possible presence of an electrical part of the installation fixed in the box, wires can still easily be fed into the box 1.

Owing to the fact that elements such as a closing plate (connecting piece) 16 and a spout part 30 can be slid from the bottom in front of a port 14, the construction of the box 1 which makes this possible, in particular the shape of the edge part 20 of the ports 14, does not have any substantial adverse effect on the shape retention of the part of the wall 2 at the open side during the manufacture of the box 1. As a result of this, while obtaining all the desired functionality, namely orientability of the ring 5, and consequently of a part of an electrical installation connected to it relative to the box 1, and multiple usability of ports 14 provided in the wall 2, a box 1 with practical dimensioning and with a guaranteed shape is obtained.

Within the scope of the claims the box 1 can be designed with combinations of one or more fixed spouts and slide-in spout parts 30, the ports 14 can be closed by closing parts which are formed integrally with the wall 2 and which can be broken away, and differently shaped elements, such as simple closing plates without central part which can be broken away and without possibilities for connection to another box, can be slid opposite the ports 14.

## Claims

1. Box (1) for an electrical installation made of plastic, comprising a bottom (3) and a wall (2) rising from the bottom (3), which wall at an open side has a cylindrical inner surface containing a circumferential groove (11), which is suitable for the accommodation therein of a circumferential rib (12) of a ring (5) which is to be placed against the cylindrical inner surface and has means (7, 8) which are suitable for fixing a bottom part of the electrical installation to the ring (5), the wall (2) being provided with at least one port (14) to which a conduit of the installation can be connected, **characterized in that** the port (14) and an element which is to be placed in front of the port (14) and to be removed from said port have edge parts which are slidable into each other and are suitable for sliding the element outside the box (1) in a direction (24) parallel to a center axis (6) of the box from the bottom (3) to opposite the port (14), but limited to a distance from the groove (11), and back, the element being an element of a group comprising a box connecting piece (16).

2. Box (1) according to claim 1, **characterized in that** the group of elements comprises a closing plate (16).

3. Box (1) according to a preceding claim, **characterized in that** the group of elements comprises a spout part (30).

4. Box (1) according to a preceding claim, **characterized in that** the port (14) extends in a direction from the bottom (3) to near a boundary part of the groove (11) situated closest to the bottom (3).

5. Box (1) according to a preceding claim, **characterized in that** the port (14) and the element have retaining parts for preventing movement of the element when the element has been slid in front of the port (14).

6. Box (1) according to claim 5, **characterized in that** the retaining parts comprise a resilient stop (25) of the port (14) or of the element, which stop can be moved parallel to the bottom (3).

7. Box (1) according to a preceding claim, **characterized in that** the edge parts (20) of the port (14) and the element which are slidable into each other form a dovetailed connection.

8. Box (1) according to a preceding claim, **characterized in that** the element is suitable for fulfilling the function of a closing plate (16) and also the function of a connecting piece, for closing the port (14) and for identical connection respectively to edge parts (20) which can be slid into each other of ports (14) of two boxes (1).

9. Box (1) according to a preceding claim, **characterized in that** if the element is a closing plate (16) or a connecting piece, the element has a part which can be broken away manually by a user, in order to form a common passage with the port (14).

## Patentansprüche

1. Dose (1) für eine elektrische Installation, aus Kunststoff hergestellt, mit einem Boden (3) und einer Wand (2), die sich von dem Boden (3) erhebt, wobei die Wand an einer offenen Seite eine zylinderförmige Innenfläche hat, die eine Umfangsrinne (11) enthält, welche für die Aufnahme einer Umfangsrippe (12) eines Rings (5) darin geeignet ist, der an der zylinderförmigen Innenfläche angeordnet werden soll und Elemente (7, 8) hat, die zum Befestigen eines Bodenteils der elektrischen Installation an dem Ring (5) geeignet sind, wobei die Wand (2) mit wenigstens einem Anschluss (14) versehen ist, an welchen eine Leitung der Installation angeschlossen werden kann, **dadurch gekennzeichnet, dass** der Anschluss (14) und ein Element, welches vor dem Anschluss (14) angeordnet werden soll und von dem Anschluss entfernt werden soll, Kantenteile haben, welche ineinander schieben können und geeignet sind zum Schieben des Elements ausserhalb der Dose (1) in eine Richtung (24) parallel zu einer Mittelachse (6) der Dose, vom Boden (3) bis gegenüber den Anschluss (14), aber bis einen Abstand zu der Rinne (11), und zurück, wobei das Element ein Element aus einer Gruppe umfassend ein Dosenverbindungsstück (16) ist.

2. Dose (1) nach Anspruch 1, **dadurch gekennzeichnet, dass** die Gruppe von Elementen eine Schließplatte (16) umfasst.

3. Dose (1) nach einem vorstehenden Anspruch, **dadurch gekennzeichnet, dass** die Gruppe von Elementen ein Ausgussteil (30) umfasst.

4. Dose (1) nach einem vorstehenden Anspruch, **dadurch gekennzeichnet, dass** sich der Anschluss (14) in einer Richtung vom Boden (3) bis nahe eines Umgrenzungsteils der Rinne (11) erstreckt, der dem Boden (3) am nächsten liegt.

5. Dose (1) nach einem vorstehenden Anspruch, der Anschluss (14) und das Element Halteteile zum Verhindern einer Bewegung des Elements haben, wenn das Element vor den Anschluss (14) geschoben worden ist.

6. Dose (1) nach Anspruch 5, **dadurch gekennzeichnet, dass** die Halteteile einen elastischen Stopper (25) des Anschlusses (14) oder des Elements umfassen, wobei dieser Stopper parallel zum Boden (3) bewegt werden kann.

7. Dose (1) nach einem vorstehenden Anspruch, **dadurch gekennzeichnet, dass** die Kantenteile (20) des Anschlusses (14) und des Elements, welche ineinander gleiten können, eine verzahnte Verbindung bilden.

8. Dose (1) nach einem vorstehenden Anspruch, **dadurch gekennzeichnet, dass** das Element zum Erfüllen der Funktion einer Schließplatte (16) und auch der Funktion eines Verbindungsstücks dazu geeignet ist, den Anschluss (14) zu verschließen und eine identische Verbindung herzustellen, jeweils mit Kantenteilen (20), die an Anschlüssen (14) von zwei Dosen (1) ineinander geschoben werden können.

9. Dose (1) nach einem vorstehenden Anspruch, **dadurch gekennzeichnet, dass,** wenn das Element eine Schließplatte (16) oder ein Verbindungsstück ist, das Element ein Teil hat, welches durch einen Benutzer manuell weggebrochen werden kann, um einen gemeinsamen Durchgang mit dem Anschluss (14) zu bilden.

## Revendications

1. Boîte de jonction (1) pour une installation électrique réalisée en plastique, comprenant un fond (3) et une paroi (2) montant à partir du fond (3), laquelle paroi au niveau d'un côté ouvert a une surface intérieure cylindrique contenant une rainure circonférentielle (11), qui est adaptée pour la réception dans celle-ci d'une nervure circonférentielle (12) d'un anneau (5) destiné à être placé contre la surface intérieure cylindrique et a des moyens (7, 8) qui sont adaptés pour fixer une partie inférieure de l'installation électrique à l'anneau (5), la paroi (2) étant pourvue d'au moins une ouverture (14) à laquelle une conduite de l'installation peut être connectée, **caractérisé en ce que** l'ouverture (14) et un élément qui est destiné à être placé en face de l'ouverture (14) et à être retiré de ladite ouverture ont des parties de bord qui sont coulissantes l'une dans l'autre et sont adaptées pour faire glisser l'élément hors de la boîte de jonction (1) dans une direction (24) parallèle à un axe central (6) de la boîte à partir du fond (3) à l'opposé de l'ouverture (14), mais limitée à une certaine distance de la rainure (11), et en retour, l'élément étant un élément d'un groupe comprenant une pièce de connexion de boîte (16).

2. Boîte de jonction (1) selon la revendication 1, **caractérisée en ce que** le groupe d'éléments comprend une plaque de fermeture (16).

3. Boîte de jonction (1) selon une revendication précédente, **caractérisée en ce que** le groupe d'éléments comprend une partie d'embouchure (30).

4. Boîte de jonction (1) selon une revendication précédente, **caractérisée en ce que** l'ouverture (14) s'étend dans une direction du fond (3) à proximité d'une partie de délimitation de la rainure (11) située le plus près du fond (3).

5. Boîte de jonction (1) selon une revendication précédente, **caractérisée en ce que** l'ouverture (14) et l'élément ont des parties de retenue pour empêcher le mouvement de l'élément quand l'élément a été glissé en face de l'ouverture (14).

6. Boîte de jonction (1) selon la revendication 5, **caractérisée en ce que** les parties de retenue comprennent une butée élastique (25) de l'ouverture (14) ou de l'élément, laquelle butée peut être déplacée parallèlement au fond (3).

7. Boîte de jonction (1) selon une revendication précédente, **caractérisée en ce que** les parties de bord (20) de l'ouverture (14) et de l'élément qui sont coulissantes l'une dans l'autre forment une connexion en queue d'aronde.

8. Boîte de jonction (1) selon une revendication précédente, **caractérisée en ce que** l'élément est adapté pour remplir la fonction d'une plaque de fermeture (16) et également la fonction d'une pièce de connexion, pour fermer l'ouverture (14) et pour une connexion identique respectivement à des parties de bord (20) qui peuvent être glissées l'une dans l'autre d'ouvertures (14) de deux boîtes de jonction (1).

9. Boîte de jonction (1) selon une revendication précédente, **caractérisée en ce que**, si l'élément est une plaque de fermeture (16) ou une pièce de connexion, l'élément a une partie qui peut être enlevée en la cassant manuellement par un utilisateur, afin de former un passage commun avec l'ouverture (14).
